# EUROPÄISCHE PATENTSCHRIFT

(11) **EP 0 711 625 B1**
(45) Veröffentlichungstag und Bekanntmachung des Hinweises auf die Patenterteilung: **11.02.1998**
(21) Anmeldenummer: 95117426.7
(22) Anmeldetag: 06.11.1995
(51) Int. Cl.: B23K 15/00, B23K 26/00

(54) **Verfahren und Vorrichtung zum Stumpf-Zusammenschweissen von Blechplatinen und Vorrichtung zur Bearbeitung zumindest einer Kante einer Blechplatine**
Process and apparatus for butt welding of sheet metal platines and apparatus for machining at least an edge of a sheet metal platine
Procédé et appareil pour le soudage bout-à-bout de platines de tôle et appareil pour l'usinage d'au moins un bord d'une platine de tôle

(30) Priorität: 11.11.1994 DE 4440365
(43) Veröffentlichungstag der Anmeldung: 15.05.1996
(73) Patentinhaber: KARL H. ARNOLD MASCHINENFABRIK GMBH & CO. KG, D-88214 Ravensburg (DE)
(72) Erfinder: Gnann, Rüdiger A., D-88214 Ravensburg (DE); Strobel, Michael, D-88356 Ostrach (DE)
(74) Vertreter: Görg, Klaus, Dipl.-Ing.

(56) Entgegenhaltungen:
- DE-C- 4 110 418
- GB-A- 1 311 654

## Beschreibung

Die Erfindung bezieht sich auf ein Verfahren zum Stumpf-Zusammenschweißen von Blechplatinen, durch Strahlschweißen zum Herstellen von sogenannten taylored blanks, das heißt Flächengebilden mit unterschiedlicher Blechstärke, sowie eine Vorrichtung zur das Stumpf-Zusammenschweißen vorbereitenden Bearbeitung zumindest einer Kante einer Blechplatine.

Speziell in der Automobilindustrie werden in Zukunft in großen Mengen verzinkte Bleche mit unterschiedlichen Blechstärken zusammengeschweißt und sogenannte 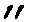 taylored blanks 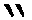 , d.h. maßgeschneiderte Platinen hergestellt. Durch die Verwendung von unterschiedlichen Blechstärken werden im Sicherheitsbereich die gesetzlichen Vorschriften in der Crash-Situation und im Restbereich durch Gewichtsreduzierung das Leistungsgewichtsverhältnis verbessert. Bei den meisten heute auf dem Markt befindlichen Automobilen werden zum Beispiel in Türen einheitliche Blechstärken verwendet und die Innentür, die verkleidet ist, durch Rohre verstärkt, damit ein verbesserter Aufprallschutz gegeben ist. Gleiche Sicherheit kann zum Beispiel erreicht werden, wenn die Innentür im unteren Bereich aus dicken Blechen hergestellt wird und die Fensterpartie aus dünnen Blechen. Andere neue Methoden bestehen zum Beispiel darin, eine Fahrzeugtür durch Strahlschweißverfahren aus vier Teilen herzustellen.

Sinn der Herstellung solcher 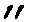 taylored blanks 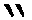 ist die Reduzierung des Fahrzeuggewichtes, Einsparung von Transportkosten durch Lieferung von vorkonfektionierten Platinen an die Automobilpreßwerke seitens der Stahlhersteller und Reduzierung des Einsatzes von Halbzeugmaterial (verzinktes Blech), da beispielsweise durch das Zusammenschweißen von mehreren Teilen bei einer Fahrzeugtür für den Fensterausschnitt kein Anfallmaterial mehr anfällt.

Wenn verzinkte Bleche mit dem Laserstrahl verschweißt werden, ist die Zone, in der das Zink auf der Oberfläche verbrennt, so schmal, daß die Korrosionsbeständigkeit wegen der Fernwirkung der Zinkbeschichtung erhalten bleibt. Das Zusammenschweißen von verzinkten Blechen, insbesondere unterschiedlicher Blechstärke ist beispielsweise der EP 0 279 866 B1 zu entnehmen. Gemäß dieser Druckschrift zum Stand der Technik wird ein Formkörper aus Blechteilen unterschiedlicher Dicke hergestellt, in dem ebene Blechteile unterschiedlicher Dicke entsprechend der späteren Belastung des Formkörpers zu einer Einheit mit einem Laserstrahl stumpf zusammengeschweißt werden und die aus den zusammengeschweißten ebenen Blechteilen bestehende Einheit durch Tiefziehen oder Pressen zum Formkörper umgeformt wird.

Aus der GB-1-311 654 ist eine Vorrichtung bekannt zum Bearbeiten von Blechkanten, die für das Stumpf-Zusammenschweißen bestimmt sind. Dabei können mehrere Bleche zu einem Stapel zusammengefaßt werden. Der Bearbeitungsvorgang kann durch Fräsen erfolgen.

Aus der DE-C-41 10 418 ist es bekannt, für das Herstellen von Blechen aus Blechplatten verschiedener Dicken die Blechplatten in einem einzigen Stanzschnitt durchzuschneiden und gleichzeitig das stumpf zu schweißende Blechteil in den Ausschnitt des anderen Blechteils einzufügen.

Ziel der vorliegenden Erfindung ist die Erzielung einer optimalen Prozeßsicherheit beim Stumpf-Zusammenschweißen von Blechplatinen mit unterschiedlicher Blechstärke, wenn das Schweißen durch Strahltechnik erfolgt (Laserstrahl, Elektronenstrahl oder dergleichen).

Diese Aufgabe wird erfindungsgemäß dadurch gelöst, daß für das Stumpf-Zusammenschweißen von Blechplatinen durch Strahlschweißen zum Herstellen von sogenannten taylored blanks, das heißt Flächengebilden mit unterschiedlicher Blechstärke folgende Verfahrensschritte vorgenommen werden:
a) Zusammenfassen mehrerer Blechplatinen zu einem Blechstapel
b) Ausrichten zumindest einer Kantenseite des Blechstapels
c) Einspannen des ausgerichteten Blechstapels bei beidseitiger Zwischenanordnung von Verschleißleisten an der Bearbeitungsseite
d) Bearbeiten der ausgerichteten Kantenseite des Blechstapels
e) Aneinanderstoßen der bearbeiteten Kanten von gemäß d) bearbeiteten Blechplatinen und
f) Zusammenschweißen der Blechplatinen an den stumpfgestoßenen Kanten.

Durch die zuvor genannte besondere Bearbeitung und die so erfolgte Kantenvorbereitung für das Zusammenschweißen kann beim Stumpfstoß ein 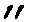 Null-Spalt 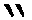 erreicht werden, was eine optimale Prozeßsicherheit im Zusammenhang mit dem Stumpf-Zusammenschweißen, insbesondere von solchen Blechplatinen verursacht, die unterschiedliche Blechstärken haben. Dabei ist es gleichgültig, ob die Planfläche zweier unterschiedlich dicker Blechplatinen oben oder unten liegt.

Diese Art der Kantenvorbereitung ist relativ einfach und kann in solch kurzer Zeit bewerkstelligt werden, daß diese Art der Kantenvorbereitung in die Serienfertigung ohne Hervorrufung von Verzögerungen eingereiht werden kann.

Durch die Erzielung eines 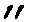 Null-Spaltes 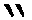 im Stoß der Blechplatinen wird die Prozeßgeschwindigkeit erhöht. Es lassen sich durch diese besondere Fertigungsmethode beliebige Konturen, auch gekrümmte in hoher Präzision ausführen, wenn ein geeignetes Werkzeug eingesetzt wird. Damit wird die Fertigungsmethode für sogenannte 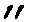 taylored blanks 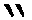 erheblich erweitert. Es kann eine gleichbleibende Prozeßführung erreicht werden.

Die Verschleißleisten werden zwar geringfügig beim Bearbeitungsvorgang abgetragen. Durch die Auflage der Verschleißleisten wird jedoch verhindert, daß sich die in der Randzone liegenden Bleche beim Bearbeiten verbiegen.

Das Bearbeiten erfolgt bevorzugt durch Fräsen. Bei der Verarbeitung kann der Blechstapel zusätzlich zur Einspannung an der Seite abgestützt werden, die der zur bearbeitenden Seite entgegengesetzt ist, so daß dem Bearbeitungsdruck ohne Verschieben der Bleche bzw. des Blechstapels Widerstand geleistet wird.

Die Kantenvorbereitung der vorgenannten Art erfolgt durch eine Vorrichtung zur Bearbeitung zumindest einer Kante einer Blechplatine, und diese Vorrichtung weist eine Ablage- und Einspanneinrichtung für einen Blechstapel auf sowie ein Bearbeitungswerkzeug zum Bearbeiten einer Kantenseite des Blechstapels, so daß in einem Arbeitsvorgang auf besonders günstige Weise mehrere Kanten gleichzeitig bearbeitet werden.

In dieser Vorrichtung sind zwischen Einspannteilen der Ablage- und Einspanneinrichtung und dem Blechstapel die vorerwähnten Verschleißleisten angeordnet.

Zweckmäßigerweise sind zumindest zwei Einspannbereiche vorgesehen, von denen eine stationär oder zustellbar in der Nähe des Bearbeitungswerkzeugs angeordnet und die andere querverschiebbar oder quer- verschiebbar- und schwenkbar und zustellbar im Abstand dazu angeordnet ist. Dadurch wird stets gewährleistet, daß eine Einspannung unmittelbar in der Nähe der Bearbeitungsstelle erfolgt und daß die weitere Einspannung oder weitere Einspannungen in Abhängigkeit von der Größe der Blechplatinen an einer weiteren geeigneten Stelle vorgenommen werden kann bzw. können, um ein Verrutschen der ausgerichteten Bleche sicher zu vermeiden und dadurch eine exakte Kantenvorbereitung für das Zusammenschweißen sicherzustellen. Dabei erfolgt vorzugsweise die Spannung nur von oben.

Um den Blechstapel für die Kantenbearbeitung ausrichten zu können, ist an der Seite des Blechstapels, die dem Bearbeitungswerkzeug entgegengesetzt liegt, ein Spannteil angeordnet, das für die ausrichtende Anlage am Blechstapel bestimmt ist, wobei dieses Spannteil schwenkbar und/oder querverschiebbar angeordnet sein kann.

Die Erfindung wird nachfolgend anhand der in den Zeichnungen schematisch dargestellten Ausführungsbeispiele näher erläutert.

Es zeigen:
- Fig.1: eine Schnittansicht durch eine Vorrichtung zur Kantenvorbereitung von stumpf zusammenzuschweißenden Blechplatinen im Blechstapel mit einem an einer Seite angeordneten Fräswerkzeug, und
- Fig.2: eine entsprechende Ansicht mit zwei Fräswerkzeugen.

In den Figuren bezeichnet das Bezugszeichen 10 eine Grundplatte mit einer darüber befindlichen Montageplatte 9. Darauf angeordnet ist ein Blechstapel 5, bestehend aus einer Vielzahl von ausgerichteten, aufeinanderliegenden Blechplatinen. Jeweils auf beiden Seiten des Blechstapels 5 befinden sich Verschleißleisten 4 und 6. In zwei Einspannbereichen 12 und 13, von denen die linke in der Figur dem Bearbeitungswerkzeug fest zugeordnet aber zuführbar und die rechte ortsveränderbar und zuführbar ist, befindet sich ein Spannbügel 1 und eine Spannleiste 3, zwischen denen ein Schlauchzylinder angeordnet ist. Der Spannbügel 1 im Spannbereich 13 ist schwenkbar und im übrigen querverschiebbar einerseits für eine Anpassung an verschiedene Blechplatinengrößen und andererseits zum Heranfahren und Wegfahren der Spannbügel.

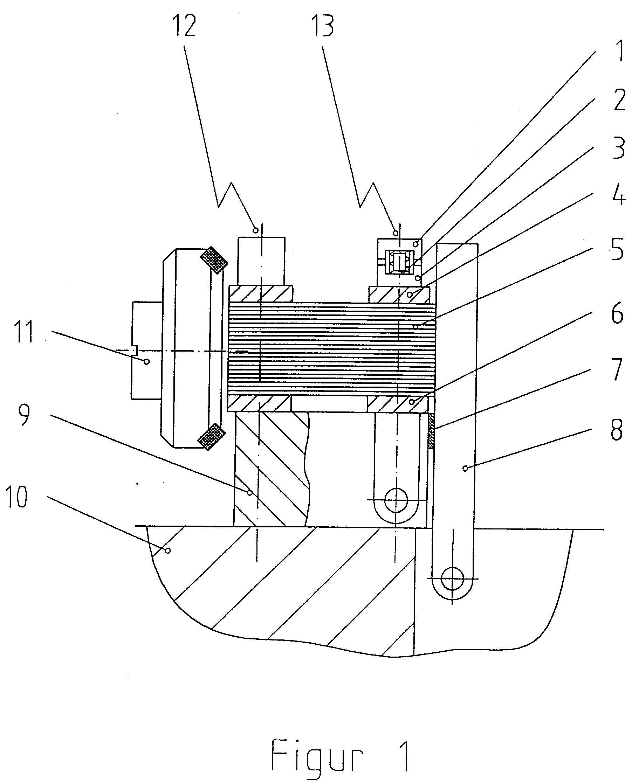

In Fig.1 befindet sich an der linken Kantenseite des Blechstapels 5 ein Fräswerkzeug 11 (Messerkopf) zur Bearbeitung dieser Kantenseite des Blechstapels, um die dort liegenden Kanten der Blechplatinen des Blechstapels für einen Stumpf-Zusammenschweißvorgang dahingehend vorzubereiten, daß der Stumpfstoß ohne Spalt möglich ist. Diese genaue Kantenvorbereitung ermöglicht sich durch das Bearbeiten der Kanten im Stapel, wie dies schematisch der Zeichnung zu entnehmen ist.

An der dem Fräswerkzeug 11 entgegengesetzten Seite des Blechstapels 5 befindet sich ein Spannlineal 8, welches an einem Anschlag 7 anliegt und mit dem der Blechstapel 5 für ein lagegerechtes Spannen ausgerichtet werden kann. Dieses Spannlineal 8 kann weggeschwenkt werden, wenn an dieser Seite ebenfalls eine Bearbeitung des Blechstapels erfolgt. Es kann dann aber auch im Spannbereich der Bearbeitungsmaschine stationär sein.

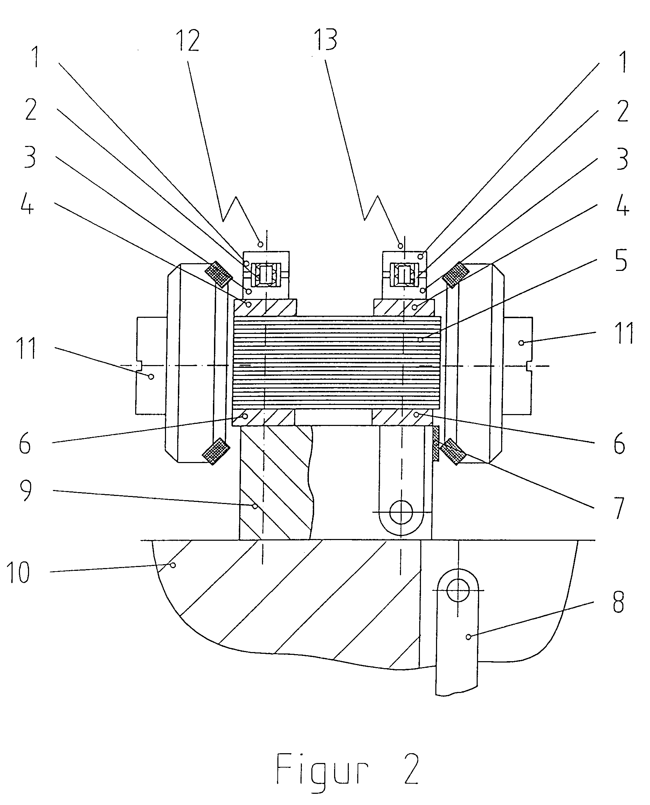

In Fig.2 ist das Spannlineal 8 nach dem Ausrichten des Blechstapels 5 weggeschwenkt dargestellt. An dieser Seite des Blechstapels 5 befindet sich ein weiteres Fräswerzeug 11.

### FUNKTIONSBESCHREIBUNG

Die Blechplatinen werden zur Verarbeitung üblicherweise in Transportgestellen gestapelt angeliefert. Zunächst erfolgt als Vorbereitung für die Schweißnahtverbindung eine Kantenbearbeitung der Blechplatinen. Dabei erfolgt die Kantenbearbeitung im Blechstapel paketweise durch Fräsen. Für das Fräsen wird der Blechstapel in Quer- und Längsrichtung sorgfältig vertikal ausgerichtet, da durch die Spannung sonst die Randzonen der Bleche verbogen werden.

An einem Ladeportal befindet sich ein Krangeschirr, daß den Stapel untergreifen kann. Mit Parallelgreifen wird der Stapel in Längs- und Querrichtung vertikal ausgerichtet. Das Richten wird durch Impulse (z.B. Schlagzylinder) verstärkt. Der Blechstapel wird dann in einer Vorrichtung gemäß der Zeichnung abgelegt und bearbeitet, wonach der Blechstapel wieder in das Transportgestell abgelegt wird. Nach Ablage des Blechstapels fahren die Spannbügel 1 über den Blechstapel. Stationär im Ladebereich werden von beiden Seiten Spannlineale 8, die vertikal stehen, an den Blechstapel 5 gedrückt. Anschließend werden an der Auflage 9 und am Spannbügel 1, 3 Verschleißleisten 4, 6 gegen die Spannlineale gefahren. Nach der Stapelpositionierung werden die Spannbügel 1 hydraulisch von oben beaufschlagt und das Blechpaket beidseitig gepreßt. Die Spannlineale 8 fahren in Grundstellung (gemäß Fig.2) und der Frässchlitten mit dem Fräswerkzeug 11 fährt durch eine Messerkopfgasse. Die Fräsaggregate führen je nach Bedarf einen zyklischen Arbeitsgang mit einem oder mehreren Fräsdurchläufen aus. Die Einstellung der Fräsgasse wird, wie die Spannzyklen, voreingestellt. Die gefrästen Blechstapel werden im Anschluß an die Bearbeitung der Schweißanlage zugeführt, wo die bearbeiteten Kanten stumpf aneinandergestoßen werden, und zwar wegen der optimalen Kantenbearbeitung und Kantenvorbereitung ohne einen Spalt im Stumpfstoß, wodurch ein optimaler Schweißvorgang erfolgen kann, insbesondere dann, wenn der Stumpfstoß von Blechplatinen unterschiedlicher Dicke zum Einsatz kommt. Dabei ist es gleichgültig, ob die Planfläche zweier unterschiedlich dicker Bleche oben oder unten liegt.

## Patentansprüche

1. Verfahren zum Stumpf-Zusammenschweißen von Blechplatinen durch Strahlschweißen, zum Herstellen von sogenannten taylored blanks, d. h. Flächengebilden mit unterschiedlicher Blechstärke, durch
a) Zusammenfassen mehrerer Blechplatinen zu einem Blechstapel (5)
b) Ausrichten einer Kantenseite des Blechstapels (5)
c) Einspannen des ausgerichteten Blechstapels (5)
d) Bearbeiten der ausgerichteten Kantenseite des Blechstapels (5)
e) Aneinanderstoßen der bearbeiteten Kanten von gemäß d) bearbeiteten Blechplatinen und
f) Zusammenschweißen der Blechplatinen an den stumpfgestoßenen Kanten
und gekennzeichnet durch das Einspannen des ausgerichteten Blechstapels bei beidseitiger Zwischenanordnung von Verschleißleisten (4, 6) an der Bearbeitungsseite.

2. Verfahren nach Anspruch 1,
dadurch **gekennzeichnet,** daß
die Bearbeitung der Blechkanten durch Fräsen erfolgt.

3. Verfahren nach Anspruch 1 oder 2,
dadurch **gekennzeichnet,** daß
der Blechstapel (5) an zwei entgegengesetzten Seiten gleichzeitig bearbeitet wird.

4. Verfahren nach einem der Ansprüche 1 bis 3,
dadurch **gekennzeichnet,** daß
das Zusammenschweißen durch Laserstrahl oder Elektronenstrahl erfolgt.

5. Verfahren nach einem der Ansprüche 1 bis 4,
dadurch **gekennzeichnet,** daß
die Blechplatinen verzinkt werden.

6. Vorrichtung zur das Stumpf-Zusammenschweißen durch Strahltechnik vorbereitenden Bearbeitung zumindest einer Kante von in einem Blechstapel zusammengefaßten Blechplatinen für das Herstellen von sogenannten taylored blanks, d. h. Flächengebilden mit unterschiedlicher Blechstärke, mit einer Ablage- und Einspanneinrichtung (1, 2, 3, 9, 10) für den Blechstapel (5) und einem Bearbeitungswerkzeug (11) zum Bearbeiten einer ausgerichteten Kantenseite des Blechstapels (5), dadurch **gekennzeichnet,** daß zwischen Einspannteilen (3) der Ablage- und Einspanneinrichtung und dem Blechstapel (5) an der Seite der Bearbeitung Verschleißleisten (4, 6) angeordnet sind.

7. Vorrichtung nach Anspruch 6,
dadurch **gekennzeichnet,** daß
zumindest zwei Einspannbereiche (12, 13) vorgesehen sind, von denen eine dem Bearbeitungswerkzeug in dessen Nähe fest zugeordnet, aber zustellbar ist und die andere (n) querverschiebbar oder querverschiebbar und schwenkbar und/oder zustellbar im Abstand dazu ist (sind).

8. Vorrichtung nach einem der Ansprüche 6 und/oder 7, dadurch **gekennzeichnet**, daß an der Seite des Blechstapels (5), die dem Bearbeitungswerkzeug (11) entgegengesetzt liegt, ein Spannteil (8) zum Ausrichten des Blechstapels angeordnet ist.

## Claims

1. Method for butt welding sheet metal bars together by beam welding, for the manufacture of so-called tailored blanks, i.e. planar structures of different sheet thickness, by
a) combining several sheet bars into a sheet stack (5)
b) aligning one edge side of the sheet stack (5)
c) clamping the aligned sheet stack (5)
d) machining the aligned edge side of the sheet stack (5)
e) butting together the machined edges of sheet metal bars machined according to d) and
f) welding together the sheet metal bars at the butted edges,
and characterised by clamping the aligned sheet stack with intermediate arrangement on both sides of wear strips (4, 6) on the machining side.

2. Method according to claim 1, characterised in that machining of the sheet edges takes place by milling.

3. Method according to claim 1 or 2, characterised in that the sheet stack (5) is simultaneously machined on two opposite sides.

4. Method according to any of claims 1 to 3, characterised in that welding together takes place by laser beam or electron beam.

5. Method according to any of claims 1 to 4, characterised in that the sheet metal bars are galvanised.

6. Apparatus for machining at least one edge of sheet metal bars combined in a sheet stack in preparation for butt welding together by a beam technique, for the manufacture of so-called tailored blanks, i.e. planar structures of different sheet thickness, with a depositing and clamping device (1, 2, 3, 9, 10) for the sheet stack (5) and a machine tool (11) for machining an aligned edge side of the sheet stack (5), characterised in that wear strips (4, 6) are arranged between clamping portions (3) of the depositing and clamping device and the sheet stack (5) on the side of machining.

7. Apparatus according to claim 6, characterised in that at least two clamping regions (12, 13) are provided, one of which is permanently associated with the machine tool in the vicinity thereof, but can be advanced, and the other(s) is (are) transversely slidable or transversely slidable and pivotable and/or capable of being advanced at a distance therefrom.

8. Apparatus according to either of claims 6 and/or 7, characterised in that on the side of the sheet stack (5) which is opposite the machine tool (11) is arranged a clamping portion (8) for aligning the sheet stack.

## Revendications

1. Procédé destiné au soudage bout à bout de platines de tôle par soudage par rayonnement, pour la fabrication d'ébauches dites "taylored blanks", c'est à dire des objets plans de grande surface présentant différentes épaisseurs de tôle, par les opérations suivantes:
a) regroupement de plusieurs platines de tôle en une pile de tôles (5)
b) dégauchissage d'un côté de bords de tôle de la pile de tôle (5)
c) serrage de la pile de tôle (5)
d) usinage du côté de bords dégauchi de la pile de tôle (5)
e) assemblage jointif des bords usinés de platines de tôle usinées conformément au point d), et
f) liaison par soudage des platines de tôle, au niveau des bords jointifs,
le procédé étant **caractérisé** par le serrage de la pile de tôles dégauchie en interposant, des deux côtés, des barres d'usure (4, 6), sur le côté d'usinage.

2. Procédé selon la revendication 1, **caractérisé** en ce que l'usinage des bords de tôle s'effectue par fraisage.

3. Procédé selon les revendications 1 ou 2, **caractérisé** en ce que la pile de tôle (5) est usinée simultanément sur deux côtés opposés.

4. Procédé selon l'une des revendications 1 à 3, **caractérisé** en ce que la liaison par soudage est effectuée par soudage par laser ou par soudage par bombardement électronique.

5. Procédé selon l'une des revendications 1 à 4, **caractérisé** en ce que les platines de tôle sont galvanisées.

6. Dispositif destiné à l'usinage préparatoire au soudage bout à bout par une technique par rayonnement, d'au moins un bord de platines de tôles regroupées en une pile de tôle, pour la fabrication d'ébauches dites "taylored blanks", c'est à dire des objets plans de grande surface présentant différentes épaisseurs de tôle, comprenant un dispositif de montage et de serrage (1, 2, 3, 9, 10) pour la pile de tôles (5) et un outil d'usinage (11) destiné à usiner un côté de bords dégauchi de la pile de tôles (5), **caractérisé** en ce qu'entre des pièces de serrage (3) du dispositif de montage et de serrage et la pile de tôle (5), sont disposées des barres d'usure (4, 6), sur le côté où s'effectue l'usinage.

7. Dispositif selon la revendication 6, **caractérisé** en ce que sont prévues au moins deux zones de serrage (12, 13) dont l'une est associée de manière fixe à l'outil d'usinage, au voisinage de celui-ci, mais peut subir une avance, et dont l'autre (ou les autres) se trouve(nt) à distance de la première, en étant coulissante transversalement ou coulissante transversalement et pivotante, et/ou susceptible de subir une avance.

8. Dispositif selon l'une des revendications 6 et/ou 7, **caractérisé** en ce que sur le côté de la pile de tôles (5), qui se situe à l'opposé de celui où se trouve l'outil d'usinage (11), est disposée une pièce de serrage (8) destinée à dégauchir la pile de tôles.
